# EUROPEAN PATENT SPECIFICATION

(11) **EP 1 650 043 B1**
(45) Date of publication and mention of the grant of the patent: **03.03.2010**
(21) Application number: 04746814.5
(22) Date of filing: 24.06.2004
(51) Int. Cl.: B41M 5/00, C08L 33/04, C09D 11/00, C09D 133/00, D06P 5/00

(54) **Ink-accepting layer forming material**
Material zur Herstellung einer tintenaufnahmefähigen Schicht
Matière formant une couche acceptant l'encre

(30) Priority: 24.06.2003 JP 2003180351
(43) Date of publication of application: 26.04.2006
(73) Proprietor: Denenchofu Roman Co., Ltd., Tokyo 145-0071 (JP)
(72) Inventor: WATANABE, Kazue, 1450071 (JP)
(74) Representative: Makovski, Priscilla Mary
(86) International application number: PCT/JP2004/009345
(87) International publication number: WO 2005/000594

(56) References cited:
- EP-A- 1 621 590
- JP-A- 2 080 681
- JP-A- 2000 238 423
- JP-A- 2002 160 443
- JP-A- 2002 513 701

## Description

### Technical Field

The present invention relates to an ink-accepting layer forming material suitably used for dyeing, printing, painting or the like using ink, an object that is to be colored to which the ink accepting layer forming material is applied, and a coloring method using the object to be colored. The present invention further relates to water-base ink, an article colored using the water-base ink, and a coloring method using the water-base ink.

### Background Art

An ink jet printing method has been progressed and extensively put to practical use in the field of printing on paper. However, fabrics, when used for printing, are different from paper in that there are wide variety of material types and roughness of woven cloth, and the upper directionality thereof is conspicuous. Therefore, when the ink jet printing method is applied to dyeing on a fabric, it is difficult to obtain a sharp pattern without feathering and uneven density of ink.

Japanese Laid-Open Patent Publication No. 61-55277 discloses a fabric for ink jet dyeing aiming at prevention of color bleeding. In this fabric for ink jet dyeing, a dye containing 0.1 to 50% by weight of a non-dyeing compound forms a holding layer. This ink retaining layer functions as printing starch used in a general printing method, and dyes a fiber with a dye retained therein. The fiber needs to be subjected to moist heat treatment to fix the dye after printing, then washed to remove excessive dye and the ink retaining layer (non-dyeing compound). Further, since the dyeing and the moist heat treatment for fixing a dye are carried out separately, there is a limitation in obtaining a delicate and sharp pattern formed with fine ink dots.

The fabric for ink jet printing disclosed in Japanese Laid-Open Patent Publication No. 8-100379 improves penetrability of the ink retaining layer by coating a surfactant as a penetrant on the surface of a single fiber of a fabric material before forming the ink retaining layer on the fabric material. However, the ink retaining layer used herein also functions as a general printing starch and a dye therefore needs to be subjected to moist heat treatment after ink jet printing and, at the same time, washing (with water) is required to remove the ink retaining layer, which is printing starch. Further, since the dyeing and the moist heat treatment to fix a dye are carried out separately, there is a limitation in obtaining a delicate and sharp pattern formed with fine ink dots.

An ink jet printing method disclosed in Japanese Laid-Open Patent Publication No. 2000-43244 adds an ink retainer and a treatment liquid composed of a synthetic resin having a glass transition temperature within the range from 60 to 130°C onto a polyester fabric and carries out moist heat treatment at a temperature of 150 to 190°C after ink jet printing. Since the synthetic resin having a glass transition temperature within the range from 150 to 190°C is formed as a film by this moist heat treatment, the texture and flexibility of a fabric per se is greatly deteriorated (hardened), and it is assumed that this fabric is not suitable for a cloth.

On the other hand, many recording materials for ink jet printing wherein an ink-accepting layer is formed on a porous base material such as paper or a fiber have been proposed (refer to Japanese Laid-Open Patent Publication No. 10-182962, Japanese Laid-Open Patent Publication No. 11-180036, Japanese Laid-Open Patent Publication No. 2000-296666, Japanese Laid-Open Patent Publication No. 2001-260523, Japanese Laid-Open Patent Publication No. 2001-353956 or the like). An ink-accepting layer of each of the above recording materials for ink jet printing contains an aqueous polyurethane resin having a glass transition temperature of not less than 20°C and further contains an inorganic filler, a dye fixing agent or the like. The purpose of using the aqueous polyurethane resin having a glass transition temperature of not less than 20°C and the inorganic filler is to form an ink-accepting layer which is firm and stable at a room temperature and, when such ink-accepting layer is applied to a fabric used for a clothe, the texture and flexibility of the cloth per se is greatly deteriorated.

Accordingly, an object of the present invention is to provide an ink-accepting layer forming material capable of imparting, when applied in advance to an ink-accepting surface of a base material to be colored with ink (e.g., dyeing, printing or painting), a dyeing property to various types of base materials together with excellent sharpness of an image, waterfastness, climatefastness, and color development of an image, regardless of whether the ink used is dye ink or pigment ink, and moreover, to impart a dyeing property to a soft base material while maintaining the texture and flexibility thereof together with excellent sharpness of an image, waterfastness, climatefastness, and color development.

Other purposes of the present invention will be apparent from the following description.

### Disclosure of the Invention

In order to attain the above objects, the present invention provides an ink-accepting layer forming material applied in advance to an ink-accepting surface of a base material that is to be colored with ink containing an anionic coloring material. The ink accepting-layer forming material comprises a weak acidic acrylic aqueous emulsion adhesive obtained by emulsion-copolymerizing 2-ethylhexyl acrylate, butyl acrylate and vinyl acetate, a water-soluble cationic polymer, and an aqueous medium. The acrylic aqueous emulsion adhesive has a viscosity of 4,000-20,000 mPa·s/30°C when it is an emulsion state with about 50% solid content, and a dried film of the acrylic aqueous emulsion adhesive has a glass transition temperature (Tg) within the range from -10 to -50°C.

The ink-accepting layer having the above construction is capable of forming a transparent dried film on the base material to be colored by being applied in advance on the ink-accepting surface of the base material to be colored with ink (e.g., dyeing, printing, or painting), and of imparting dyeing property to various materials together with excellent sharpness of an image, waterfastness, climatefastness and color development, regardless of whether the ink used is dye ink or pigment ink, and moreover, to a soft base material while maintaining the texture and flexibility thereof together with excellent sharpness of an image, waterfastness, climatefastness and color development,.

It is assumed that the water-soluble cationic polymer contained in the ink-accepting layer forming material improves the absorption of emulsion particles of the acrylic adhesive together with improving the adsorption of the anionic coloring material onto the dried film of the acrylic adhesive. The dried film of the ink-accepting layer forming material is effective even when the ink containing the anionic coloring material is water-base ink or when printing is carried out by a laser printer or a color photocopier.

The adsorption of the base material to be colored and the ink to the anionic coloring material is deteriorated resulting in insufficient adhesion or sticking force when the acrylic aqueous emulsion adhesive has a viscosity of not more than 4,000 mPa·s/30°C or not less than 20,000 mPa·s/30°C when it is an emulsion state with about 50% solid content. Further, the viscosity of not less than 20, 000 mPa·s/30°C when it is an emulsion state with about 50% solid content causes deterioration of penetrability into the base material to be colored, particularly, into fiber structures such as cloth, paper and leather, and also causes a damage to the flexibility of the cloth in particular. Accordingly, it is more preferable that the viscosity of the acrylic aqueous emulsion adhesive has a viscosity of 10, 000-15, 000 mPa·s/30°C when it is an emulsion state with about 50% solid content.

The adsorption of the base material to be colored and the ink to the anionic coloring material is deteriorated resulting in insufficient adhesion or sticking force when the acrylic aqueous emulsion adhesive has either glass transition temperature (Tg) of higher than -10°C or lower than -50°C. Further, when the glass transition temperature (Tg) of the dried film is higher than -10°C and cloth is used as a base material to be colored, a dried film formed on the surface of the fiber of the cloth causes deterioration of the texture of the cloth. Further, when the glass transition temperature (Tg) of the dried film is lower than -50°C, the dried film formed on the base material to be colored gives an unpleasant feeling when touched with a hand. Accordingly, it is more preferable that the acrylic aqueous emulsion adhesive has a glass transition temperature (Tg) in a dried film form of -40°C.

Preferably, the acrylic aqueous emulsion adhesive is obtained by copolymerizing one or more ester (meth)acrylates having an alkyl group with 4-12 carbon atoms and a vinyl monomer in the presence of a nonionic surfactant or a nonionic surfactant and an anionic surfactant. Even when the acrylic aqueous emulsion adhesive is emulsion-polymerized in the presence of a nonionic surfactant or when the acrylic aqueous emulsion adhesive is subjected to emulsion-polymerization in the presence of a nonionic surfactant and an anionic surfactant, the mixture of the acrylic aqueous emulsion adhesive and the water-soluble cationic polymer does not generate agglutinate which may be an obstacle in practical use, and the acrylic aqueous emulsion adhesive can maintain sufficient practical dispersibility.

Preferably, the solid content of the acrylic aqueous emulsion adhesive is 0. 5 to 5% by weight, the content of the water-soluble cationic polymer is 0.1 to 3% by weight, and the rest is an aqueous medium. When the solid content of the acrylic aqueous emulsion adhesive is more than 5% by weight, penetrability of the emulsion particles into the fiber of cloth, in particular, is deteriorated. When the solid content of the acrylic aqueous emulsion adhesive is less than 0.5% by weight, the number of times the ink-accepting layer forming material is applied to the base material to be colored needs to be inefficiently increased. When the content of the water-base cationic polymer less than 0.1% by weight, the adhesion or sticking force of the coloring material contained in the ink is deteriorated resulting in deterioration of fastness to washing with water and cleaning. On the other hand, when the content of the water-soluble cationic polymer is more than 3% by weight, the content is excessive on the basis of the solid content of the acrylic aqueous emulsion adhesive, and when the base material to be colored is wetted by water after coloring (dyeing, printing, painting or the like), the surplus of the water-base cationic polymer flows out and causes contamination of the environment.

Preferably, the acrylic aqueous emulsion adhesive has the average molecular weight (Mn) within the range from 3,000 to 20,000 and the weight-average molecular weight (Mw) within the range from 10,000 to 100,000.

Preferably, the acrylic aqueous emulsion adhesive has a mean particle diameter within the range from 0.1 to 3 µm as measured by the laser diffusion method.

Preferably, the minimum forming temperature (MFT) of the dried film of the acrylic aqueous emulsion adhesive is not more than 0°C.

The acrylic aqueous emulsion adhesive is obtained by emulsion copolymerization of 2-ethylhexyl acrylate, butyl acrylate, and vinyl acetate.

Preferably, the content of the vinyl acetate in the acrylic aqueous emulsion adhesion is 20 to 30% by weight on the basis of the whole copolymer.

Preferably, the water-soluble cationic polymer is a copolymer of quaternary ammonium salts.

Preferably, the water-soluble cationic polymer comprises a monoarylamine derivative represented by a general formulaCH₂=CH-CH₂-NHR (wherein R represents an alkyl group with 1-18 carbon atoms, a substituted alkyl group, an aralkyl group, or a cycloalkyl group) or a polymer of the salts thereof; or a copolymer of the monoarylamine derivative or a polymer of the salts thereof and a monomer having an unsaturated double bond, which is copolymerizable with the above derivative or the polymer.

Preferably, the water-soluble cationic polymer is a polyarylamine hydrochloride having a weight-average molecular weight (Mw) within the range from 1,000 to 5,000.

Preferably, an aqueous emulsion of a weak acidic modified silicon resin with a nonionic or a weak anionic particle charge is added to the ink-accepting layer forming material.

Preferably, an aqueous emulsion of a weak acidic fluorine resin with a nonionic or a weak anionic particle charge is added to the ink-accepting layer forming material.

Preferably, an aqueous emulsion of weak acidic polylactic acid with a nonionic or a weak anionic particle charge.

Preferably, the anionic coloring material has an anionic group, more preferably, the anionic coloring material is at least one selected from the group consisting of a pigment, an inorganic colorant, a direct dye, an acid dye and a reactive dye.

### Best Mode for Carrying Out the Invention

Specific examples of the ester (meth)acrylates having an alkyl group with 4-12 carbon atoms used in the present invention include: 2-ethylhexyl acrylate and the butyl acrylate. Further, preferable examples of the vinyl monomers used in the present invention include vinyl acetate.

When, for example, a copolymer of butyl acrylate, 2-ethylhexyl acrylate, and vinyl acetate is selected, a mixing ratio of these monomers can be suitably selected so that a glass transition temperature (Tg) of the copolymer is in the range from -10to -50°C, more preferably, the glass transition temperature (Tg) is in the range from -30 to -50°C and the viscosity of the emulsion is 4,000-20,000 mPa-s/30°C with about 50% by weight solid content. Various types of nonionic surfactants may be used for polymerization of the above-described polymerizable monomers and specific examples thereof include: polyoxyethylene alkyl ether and polyoxyethylene ester fatty acid. Further, various types of anionic surfactants may be used for polymerization of the above-described polymerizable monomers and specific examples thereof include: polyoxyethylene-alkylether sodium ethane sulfonate and acyl monosodium glutamate. Then, the acidity is adjusted to weak acidity (pH 4 to 6) to obtain the acrylic aqueous emulsion adhesive (A) with the solid content of 40 to 60% by weight.

Further, specific examples of the quaternary ammonium salt (B1) used as an acidic or weak acidic water-soluble cationic polymer (B) in the present invention include: alkyl trimethyl ammonium chloride, stearyl dimethyl benzyl ammonium chloride, and stearyl trimethyl ammonium chloride.

Further, specific examples of the monoaryl amine derivative represented by a general formula CH₂ = CH-CH₂-NHR (wherein R represents an alkyl group with 1-18 carbon atoms, a substituted alkyl group, an aralkyl group, or a cycloalkyl group) or a polymer of the salts thereof (B2) used as the acidic or weak acidic water-soluble cationic polymer (B) in the present invention include: an arylamine polymer, an arylamine hydrochloride polymer, an arylamine sulfate polymer, an arylamine phosphate polymer, and N-methylarylamine polymer. Further, specific examples of the copolymer of the monoaryl amine derivative or a polymer of the salts thereof and a monomer having an unsaturated double bond which is polymerizable with the derivative or the polymer (B3) include: an arylamine-N-methylarylamine polymer and a hydrochloric acid, a phosphoric acid, and a sulfuric acid of the copolymer. Furthermore, among the copolymers exemplified in Japanese Laid-Open Patent Publication No. 2-80681, an aqueous solution of polycation having the molecular structure represented by formula (1) or (2), in particular, can be suitably used.

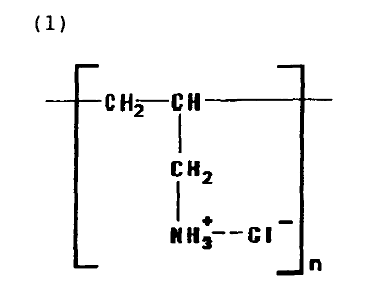

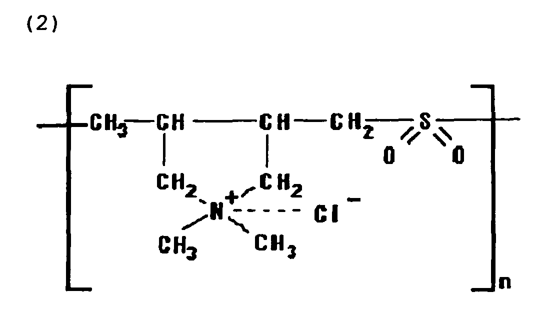

The acrylic aqueous emulsion adhesive (A) and the acidic or weak acidic water-soluble cationic polymer (B) can be mixed evenly without generation of agglutinate in the aqueous medium. This mixture is diluted to 20 to 50 times with the aqueous medium and the weak solution (M) is applied to an object to be colored with ink (dyeing, printing, painting, or the like) in advance by impregnation, coating, spraying, or the like, thereby drying the object to form the dried film of the ink-accepting layer forming material on the surface of the object. In the completed weak solution (M), that is, the ink-accepting layer forming material, it is preferable that the solid content of the acrylic aqueous emulsion adhesive is 0.5 to 5% by weight, the content of the water-soluble cationic polymer (B) is 0.1 to 3% by weight, and the rest is the aqueous medium.

Cloth, paper, wood, glass, plastic, stone, metal, or the like may be used as a base material of the object to be colored. The aqueous medium may be water. However, in order to increase the evaporation rate of the aqueous medium, 10 to 30% of alcohol such as ethyl alcohol, methyl alcohol, or the like may be added to the water.

It was confirmed by either visual observation or microscopic observation that a film was formed on any one of the above-described object to be colored by adsorbing emulsion particles in the weak solution onto the surface of the object at the moment of dipping the object into the weak solution to form a film. When the object to be colored is formed of various types fibers, the emulsion particles in the weak solution is excellent in penetrability and has a property of forming a film on the surface of a single fiber. Accordingly, when the object to be colored is dried to evaporate water in the weak solution after the formation of the film, a very thin transparent film having an even thickness is formed on the surface of the object to be colored. Further, when the object to be colored is formed of various types of fibers, a film covering the surface of each single fiber may also be formed. Further, this film adheres strongly to any one of the above-described objects to be colored and also to a low-adherent object such as PP or PE and a surface of a sheet subjected to water-repellent treatment.

When ink-jet printing is carried out on the object to be colored whereon the above-described film is formed, ink dots are absorbed into the film and fixed therein at the moment of adhesion of the ink dots to the film when the components of the water-base ink are either dyes or pigments. Accordingly, it is possible to obtain a print without color bleeding which is excellent in ink fixation, sharpness of an image, waterfastness, climatefastness, and color development.

The print thus obtained can be used immediately after the ink is dried. Slight stickiness however sometimes remain in the region where the ink is not adhered to the surface of the film. Accordingly, when the film after printing is heated to 80 to 100°C by using high-temperature water heated to 80 to 100°C, steam, or hot wind, the film is stabilized and, in particular, the stickiness is removed from the region where the ink is not deposited so that the touch of the film is improved and the film is prevented from being stained. Furthermore, the surface whereto the ink is adhered becomes smooth and glossy with good color development.

Upon comparison of printing on the film formed of the mixture of the acrylic aqueous emulsion adhesive (A) and the water-soluble cationic polymer (B) to printing on the film formed of only the acrylic aqueous emulsion adhesive (A), it was confirmed that the film formed of the mixture of the acrylic aqueous emulsion adhesive (A) and the water-soluble cationic polymer (B) was excellent in all of ink fixation, sharpness of an image, waterfastness, climatefastness, and color development.

Furthermore, a coloring material (C) containing at least a dye, an inorganic pigment, an organic pigment, and a functional colorant may further contain a fragrance, a deodorizer, a medicinal agent, or the like in the water-base ink composition (N) made of the mixture of the acrylic aqueous emulsion adhesive (A), the water-soluble cationic polymer (B) , and the coloring material (C). Furthermore, the coloring material (C) may also contain glossy metal powder for a metallic effect.

### Industrial Applicability

As is clear from the above description, according to the present invention, it is possible of providing an ink-accepting layer forming material capable of imparting a printing suitability to various base materials together with excellent sharpness of an image, waterfastness, climatefastness, and color development by using either of dye ink or pigment ink, and moreover, to soft base materials while maintaining the texture and flexibility thereof together with excellent sharpness of an image, waterfastness, climatefastness, and color development.

## Claims

1. An ink-accepting layer forming material to be applied in advance to an ink-accepting surface of an object that is to be colored with ink containing an anionic coloring material, said ink-accepting layer forming material comprising:
an acidic acrylic aqueous emulsion adhesive having a pH range of 4-6 and obtained by copolymerizing one or more ester(meth)acrylates having an alkyl group with 4-12 carbon atoms and a vinyl monomer;
a water-soluble cationic polymer; and
an aqueous medium, wherein
said acrylic aqueous emulsion adhesive has a viscosity of 4,000-20,000 mPa·s/30°C when it is in an emulsion state with about 50% solid content, and a dried film of said acrylic aqueous emulsion adhesive has a glass transition temperature within the range from -10 to-50°C, wherein said acrylic aqueous emulsion adhesive is obtained by emulsion-copolymerisation of 2-ethylhexyl acrylate, butyl acrylate, and vinyl acetate.

2. An ink-accepting layer forming material according to claim 1, wherein a solid content of said acrylic aqueous emulsion adhesive is 0.5 to 5% by weight, a content of said water-soluble cationic polymer is 0.1 to 3% by weight, and the rest is an aqueous medium.

3. An ink-accepting layer forming material according to claim 1 or claim 2, wherein a minimum forming temperature of a dried film of said acrylic aqueous emulsion adhesive is not more than 0°C.

4. An ink-accepting layer forming material according to any preceding claim, wherein a content of said vinyl acetate in said acrylic aqueous emulsion adhesive is in the range from 20 to 30% by weight on the basis of a whole copolymer.

5. An ink-accepting layer forming material according to claim 1, wherein said water-soluble cationic polymer is a polymer of quaternary ammonium salts.

6. An ink-accepting layer forming material according to claim 1, wherein said water-soluble cationic polymer comprises a monoarylamine derivative represented by a general formula CH₂ = CH-CH₂-NHR (wherein R represents an alkyl group with 1-18 carbon atoms, a substituted alkyl group, an aralkyl group, or a cycloalkyl group) or a polymer of salts thereof, or a copolymer of said monoarylamine derivative or a polymer of salts thereof and a monomer having an unsaturated double bond, which is copolymerizable with said derivative or said polymer.

7. An ink-accepting layer forming material according to claim 1, further comprising an aqueous emulsion of an acidic modified silicon resin having pH range of 4-6 and a non-ionic or anionic particle charge.

8. An ink-accepting layer forming material according to claim 1, further comprising an aqueous emulsion of an acidic fluorine resin having pH range of 4-6 and a non-ionic or anionic particle charge.

9. An ink-accepting layer forming material according to claim 1, 7 or 8, further comprising an aqueous emulsion of a polylactic acid having pH range of 4-6 and a non-ionic or anionic particle charge.

## Patentansprüche

1. Eine Tintenannahmeschicht bildendes Material, das vorab aufzutragen ist auf eine Tintenannahme-Oberfiäche eines Gegenstands, der mit Tinte, die ein anionisches farbgebendes Material enthält, gefärbt werden soll, wobei das die Tintenannahmeschicht bildende Material aufweist:
einen sauren wässrigen Acryl-Emulsionsklebstoff, der einen pH-Bereich von 4-6 hat und durch Copolymerisieren eines (Meth)acrylesters oder mehrerer (Meth)acrylester mit einer Alkylgruppe mit 4 bis 12 Kohlenstoffatomen und eines Vinylmonomers erhalten wurde;
ein wasserlösliches kationisches Polymer, und
ein wässriges Medium, wobei
der wässrige Acryl-Emulsionsklebstoff eine Viskosität von 4.000 bis 20.000 mPa· s/30°C hat, wenn er sich im Zustand einer Emulsion mit etwa 50% Feststoffgehalt befindet, und ein getrockneter Film des wässrigen Acryl-Emulsionsklebstoffs eine Glasübergangstemperatur in dem Bereich von -10 bis -50°C hat, wobei der wässrige Acryl-Emulsionsklebstoff erhalten wird durch Emulsions-Copolymerisation von 2-Ethylhexyl-acrylat, Butyl-acrylat und Vinylacetat.

2. Eine Tintenannahmeschicht bildendes Material nach Anspruch 1, bei dem ein Feststoffgehalt des wässrigen Acryl-Emulsionsklebstoffs 0,5 bis 5 Gew.-% beträgt, ein Gehalt des wasserlöslichen kationischen Polymers 0,1 bis 3 Gew.-% beträgt und der Rest ein wässriges Medium ist.

3. Eine Tintenannahmeschicht bildendes Material nach Anspruch 1 oder 2, bei dem eine untere Bildungstemperatur eines getrockneten Films des wässrigen Acryl-Emulsionsklebstoffs nicht mehr als 0°C beträgt.

4. Eine Tintenannahmeschicht bildendes Material nach einem vorangehenden Anspruch, bei dem ein Gehalt des Vinylacetats in dem wässrigen Acryl-Emulsionsklebstoff in dem Bereich von 20 bis 30 Gew.-% auf der Basis eines Copolymers insgesamt beträgt.

5. Eine Tintenannahmeschicht bildendes Material nach Anspruch 1, bei dem das wasserlösliche kationische Polymer ein Polymer von quaternären Ammoniumsalzen ist.

6. Eine Tintenannahmeschicht bildendes Material nach Anspruch 1, bei dem das wasserlösliche kationische Polymer aufweist ein Monoarylamin-Derivat das repräsentiert wird durch eine allgemeine Formel CH₂ = CH-CH₂-NHR (worin R eine Alkylgruppe mit 1-18 Kohlenstoffatomen, eine substituierte Alkylgruppe, eine Aralkylgruppe oder eine Cykloalkylgruppe repräsentiert), oder ein Polymer von Salzen davon oder ein Copolymer des Monoarylamin-Derivats oder ein Polymer von Salzen davon und ein Monomer mit einer ungesättigten Doppelbindung, das mit dem Derivat oder dem Polymer copolymerisierbar ist.

7. Eine Tintenannahmeschicht bildendes Material nach Anspruch 1, außerdem aufweisend eine wässrige Emulsion eines sauren modifizierten Silikonharzes mit einem pH-Bereich von 4 bis 6 und einer nichtionischen oder anionischen Teilchenladung.

8. Eine Tintenannahmeschicht bildendes Material nach Anspruch 1, außerdem aufweisend eine wässrige Emulsion eines sauren Fluorharzes mit einem pH-Bereich von 4 bis 6 und einer nichtionischen oder anionischen Teilchenladung.

9. Eine Tintenannahmeschicht bildendes Material nach Anspruch 1, 7 oder 8, außerdem aufweisend eine wässrige Emulsion einer Polymilchsäure mit einem pH-Bereich von 4 bis 6 und einer nichtionischen oder anionischen Teilchenladung.

## Revendications

1. Matériau de formation d'une couche imprimable par une encre à appliquer à l'avance à une surface imprimable par une encre d'un objet qui doit être coloré avec une encre contenant un matériau colorant anionique, ledit matériau de formation de couche imprimable par une encre comprenant :
un adhésif d'émulsion aqueuse acrylique acide ayant une gamme de pH de 4 à 6 et obtenu par copolymérisation d'un ou plusieurs esters de (méth)acrylates ayant un groupe alkyle de 4 à 12 atomes de carbone et d'un monomère de vinyle ;
un polymère cationique soluble dans l'eau ; et
un milieu aqueux, où
ledit adhésif d'émulsion aqueuse acrylique a une viscosité de 4 000 à 20 000 mPa.s/30 °C lorsqu'il est dans un état d'émulsion avec une teneur en solides d'environ 50 %, et un film séché dudit adhésif d'émulsion aqueuse acrylique a une température de transition vitreuse dans la gamme de -10 à -50 °C, où ledit adhésif d'émulsion aqueuse acrylique est obtenu par copolymérisation en émulsion de l'acrylate de 2-éthylhexyle, de l'acrylate de butyle et de l'acétate de vinyle.

2. Matériau de formation d'une couche imprimable par une encre selon la revendication 1, dans lequel la teneur en solides dudit adhésif d'émulsion aqueuse acrylique est de 0,5 à 5 % en poids, la teneur dudit polymère cationique soluble dans l'eau est de 0,1 à 3 % en poids, et le reste est un milieu aqueux.

3. Matériau de formation d'une couche imprimable par une encre selon la revendication 1 ou la revendication 2, dans lequel la température minimale de formation d'un film séché dudit adhésif d'émulsion aqueuse acrylique n'est pas supérieure à 0 °C.

4. Matériau de formation d'une couche imprimable par une encre selon l'une quelconque des revendications précédentes, dans lequel la teneur dudit acétate de vinyle dans ledit adhésif d'émulsion aqueuse acrylique est dans la gamme de 20 à 30 % en poids par rapport au copolymère entier.

5. Matériau de formation d'une couche imprimable par une encre selon la revendication 1, dans lequel ledit polymère cationique soluble dans l'eau est un polymère de sels d'ammonium quaternaire.

6. Matériau de formation d'une couche imprimable par une encre selon la revendication 1, dans lequel ledit polymère cationique soluble dans l'eau comprend un dérivé de monoarylamine représenté par la formule générale CH₂=CH-CH₂-NHR, (où R représente un groupe alkyle de 1 à 18 atomes de carbone, un groupe alkyle substitué, un groupe aralkyle, ou un groupe cycloalkyle) ou un polymère de sels de celui-ci, ou un copolymère dudit dérivé de monoarylamine ou un polymère de sels de celui-ci et d'un monomère comportant une double liaison insaturée, qui est copolymérisable avec ledit dérivé ou ledit polymère.

7. Matériau de formation d'une couche imprimable par une encre selon la revendication 1, comprenant en outre une émulsion aqueuse d'une résine silicone modifiée acide ayant une gamme de pH de 4 à 6 et une charge de particule non ionique ou anionique.

8. Matériau de formation d'une couche imprimable par une encre selon la revendication 1, comprenant en outre une émulsion aqueuse d'une résine fluorée acide ayant une gamme de pH de 4 à 6 et une charge de particule non ionique ou anionique.

9. Matériau de formation d'une couche imprimable par une encre selon la revendication 1, 7 ou 8, comprenant en outre une émulsion aqueuse d'un poly(acide lactique) ayant une gamme de pH de 4 à 6 et une charge de particule non ionique ou anionique.
